# EUROPEAN PATENT APPLICATION

(11) **EP 4 647 321 A1**
(43) Date of publication of application: **12.11.2025**
(21) Application number: 23914687.1
(22) Date of filing: 06.01.2023
(51) Int. Cl.: B62D 21/02

(54) **AUTOMOBILE**

(71) Applicant: Nissan Motor Co., Ltd., Kanagawa 221-0023 (JP)
(72) Inventor: YAMADA, Takafumi, Atsugi-shi, Kanagawa 243-0123 (JP); NAKAYAMA, Kazutoshi, Atsugi-shi, Kanagawa 243-0123 (JP); OKAMOTO, Hiroya, Hiratsuka-shi, Kanagawa 254-8610 (JP); SAITO, Takashi, Hiratsuka-shi, Kanagawa 254-8610 (JP); MAYAMA, Akihiro, Atsugi-shi, Kanagawa 243-0021 (JP); SAWADA, Hiromasa, Atsugi-shi, Kanagawa 243-0021 (JP); SAHARA, Yusuke, Atsugi-shi, Kanagawa 243-0021 (JP)
(74) Representative: Global IP Europe Patentanwaltskanzlei
(86) International application number: PCT/JP2023/000188
(87) International publication number: WO 2024/147196

(57) **Abstract**

An automobile comprising: a chassis frame (1) having a pair of side members (11, 11) and a plurality of cross members (13); an engine (E) supported by an engine mount bracket (15) provided at least on the side members (11); and a front differential gear unit (D) supported by the chassis frame (1) at least at a front mount portion (D5, D6). The front differential gear unit (D) transmits driving force of the engine (E) to front wheels (W). The front mount portion (D5, D6) is supported at a position on the side members (11) that overlaps the engine mount bracket (15) in a plan view.

## Description

### [Technical Field]

The present invention relates to an automobile and more particularly to an attachment structure for a front differential gear unit to a chassis frame.

### [Background Art]

In four-wheel drive automobiles equipped with chassis frames, an automobile is known in which the front differential gear unit is elastically supported on the chassis frame at three points (Patent Document 1). In this automobile, the left-side front mount for the front differential gear unit is supported on a second cross member of the chassis frame, and the right-side front mount and rear mount are supported on a third cross member (see paragraph [0058] and FIG. 20 of Patent Document 1, etc.).

### [Prior Art Documents]

### [Patent Documents]

[Patent Document 1] WO2011/101906

### [Summary of Invention]

### [Problems to be solved by Invention]

In the above conventional automobile, however, the left-front-side mount of the front differential gear unit is supported by the second cross member of the chassis frame, so in the event of a full-wrap frontal collision or the like, there is a problem in that no space can be ensured between the second and third cross members to absorb the collision energy when the side members collapse.

A problem to be solved by the present invention is to provide an automobile that can ensure a space to absorb the collision energy during a frontal collision when the side members collapse.

### [Means for solving problems]

The present invention solves the above problem by using a side member of a chassis frame to support the front mount portion of a front differential gear unit at a position that overlaps the engine mount bracket in a plan view.

### [Effect of Invention]

According to the present invention, it is possible to ensure a space behind an adjacent cross member in front of the engine mount bracket to absorb the collision energy during a frontal collision when the side members collapse.

### [Brief Description of Drawings]

FIG. 1 is a side view illustrating the entire automobile according to an embodiment of the present invention.
FIG. 2 is a plan view illustrating the chassis frame of FIG. 1.
FIG. 3 is a perspective view illustrating the main portion of a front differential gear unit according to an embodiment of the present invention.
FIG. 4 is a plan view illustrating an attachment structure of the front differential gear unit of FIG. 3 to the chassis frame.
FIG. 5A is a view illustrating a left-side front mount bracket according to an embodiment of the present invention, viewed from arrow V of FIG. 4.
FIG. 5B is an exploded perspective view of the left-side front mount bracket of FIG. 5A.
FIG. 6A is a view illustrating a right-side front mount bracket according to an embodiment of the present invention, viewed from arrow VI of FIG. 4.
FIG. 6B is an exploded perspective view of the right-side front mount bracket of FIG. 6A.
FIG. 7 is a cross-sectional view taken along line VII-VII of FIG. 5A.
FIG. 8 is a cross-sectional view taken along line VIII-VIII of FIG. 6A.

### [Mode(s) for Carrying out the Invention]

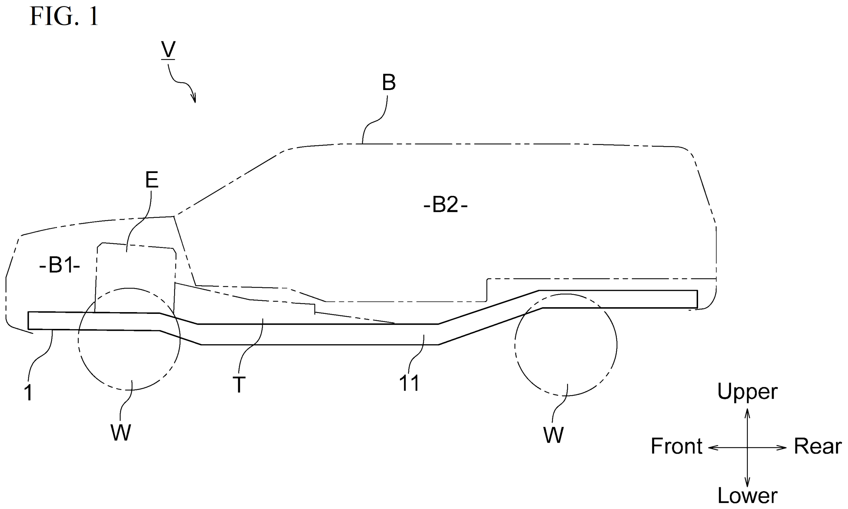

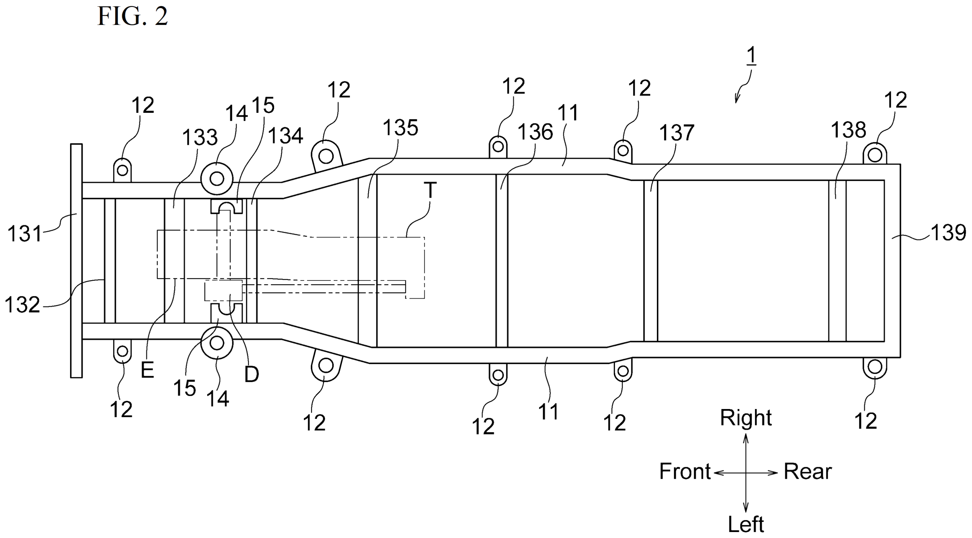

Hereinafter, one or more embodiments of the present invention will be described with reference to the drawings. FIG. 1 is a side view illustrating the entire automobile according to an embodiment of the present invention, and FIG. 2 is a plan view illustrating the chassis frame of FIG. 1. Automobile V of the present embodiment is a chassis frame type vehicle, and is a front engine/four-wheel drive automobile. The automobile V of the present embodiment includes a chassis frame 1 and an upper body B fixed to this chassis frame 1, and an engine E, a transmission T, a suspension device (not illustrated) including wheels W, etc. are mounted on the chassis frame 1. The upper body B including an engine room B1 and a cabin B2 is attached via elastic bodies to a plurality of cab mount brackets 12 (see FIG. 2) provided on side members 11 of the chassis frame 1, and thus the upper body B is mounted on the chassis frame 1.

The chassis frame 1 of the present embodiment includes a pair of right and left side members 11 and 11 and a plurality of cross members 13. Both the side members 11 and the cross members 13 are formed by processing steel sheets or other metal sheets and are made into a frame material having a closed cross section through combining and joining sheet materials, such as by welding. As illustrated in FIG. 1, each side member 11 extends from the front end to the rear end of the automobile V, and as illustrated in FIG. 2, a first cross member 131, a second cross member 132, a third cross member 133, a fourth cross member 134, a fifth cross member 135, a sixth cross member 136, a seventh cross member 137, an eighth cross member 138, and a ninth cross member 139 are bridged between the pair of side members 11 and 11 from the front end to the rear end. The side members 11 and each cross member 13 are firmly joined by welding or the like, and the chassis frame 1 of the present embodiment is thereby formed into a robust frame component capable of supporting the power train including the engine E and the transmission T, the underbody components including the wheels W, and the upper body B. In FIG. 2, reference numeral 14 denotes suspension towers to which springs of suspension devices are attached.

As illustrated in FIG. 2, the engine E of the present embodiment is supported by engine mount brackets 15 and 15 provided on the right and left side members 11 and 11 between the third cross member 133 and the fourth cross member 134. The transmission T assembled to the engine E is supported by the fifth cross member 135. Since the automobile of the present embodiment is a front-engine, four-wheel drive vehicle, the transmission T is connected not only to a rear differential gear unit (not illustrated) that transmits the driving force of the engine E to the rear wheels W, but also to a front differential gear unit D that transmits the driving force of the engine E to the front wheels W.

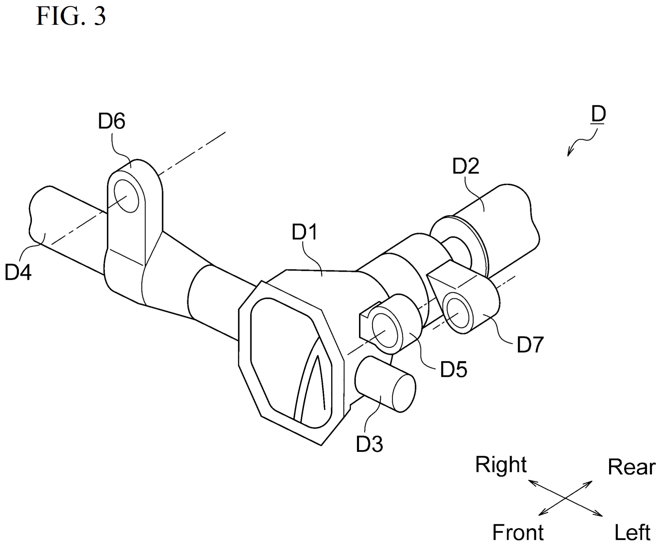

FIG. 3 is a perspective view illustrating the main portion of the front differential gear unit D of the present embodiment. The front differential gear unit D of the present embodiment has a casing D1 that houses a differential gear (not illustrated), and the input side of this differential gear is connected to a drive shaft D2 that is connected to the output shaft of the transmission T. The rotation of the drive shaft D2 input is output to a left front wheel drive shaft D3 and a right front wheel drive shaft D4 via the differential gear. As illustrated in FIG. 2, the front differential gear unit D of the present embodiment is mounted on the left side of the engine E, so that a left-side front mount portion D5 and a right-side front mount portion D6 are provided on the front side of the casing D1, and a rear mount portion D7 is provided on the rear side of the casing D1.

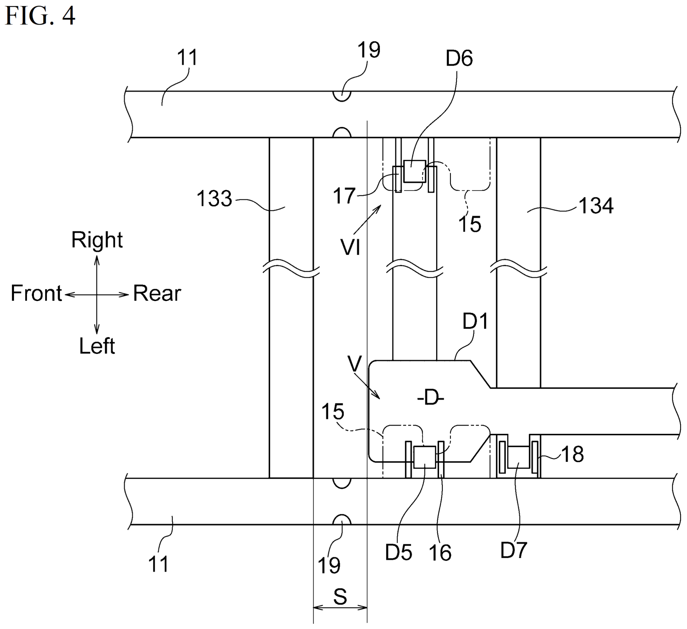

FIG. 4 is a plan view illustrating the attachment structure of the front differential gear unit D illustrated in FIG. 3 to the chassis frame 1, and is an enlarged plan view of a portion between the third cross member 133 and fourth cross member 134 of FIG. 2. The front differential gear unit D of the present embodiment is supported by the chassis frame 1 at three points as illustrated in FIG. 4. That is, the left-side front mount portion D5 is attached to a left-side front mount bracket 16 fixed to the side member 11 on the left side, and the right-side front mount portion D6 is attached to a right-side front mount bracket 17 fixed to the side member 11 on the right side. The rear mount portion D7 is attached to a rear mount bracket 18 fixed to the adjacent fourth cross member 134 on the rear side of the engine mount brackets 15.

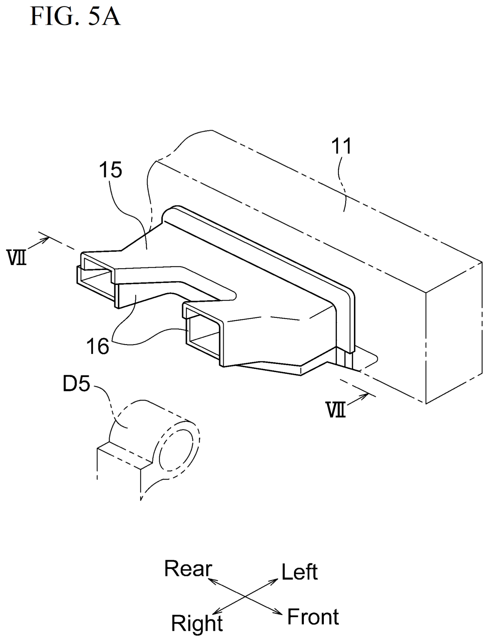

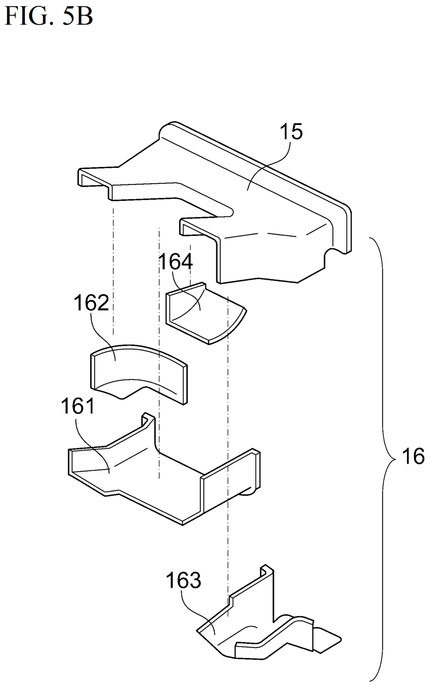

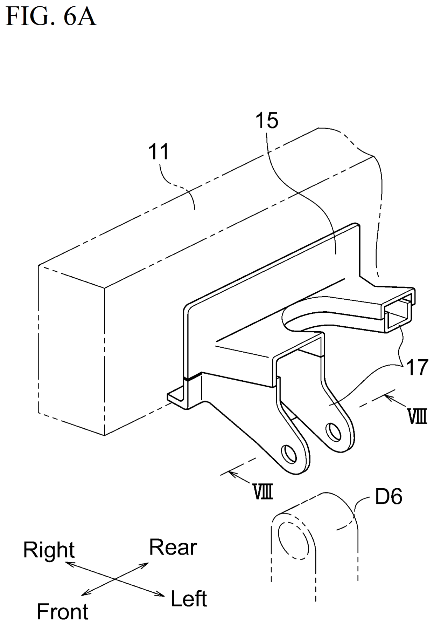

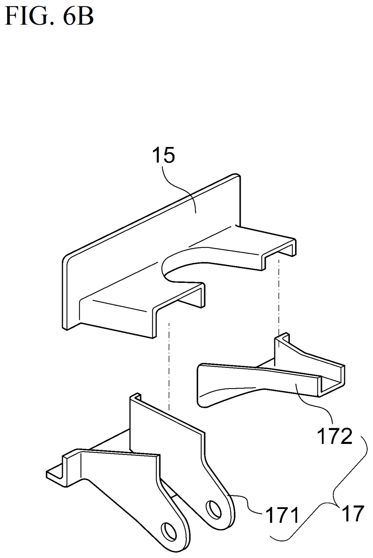

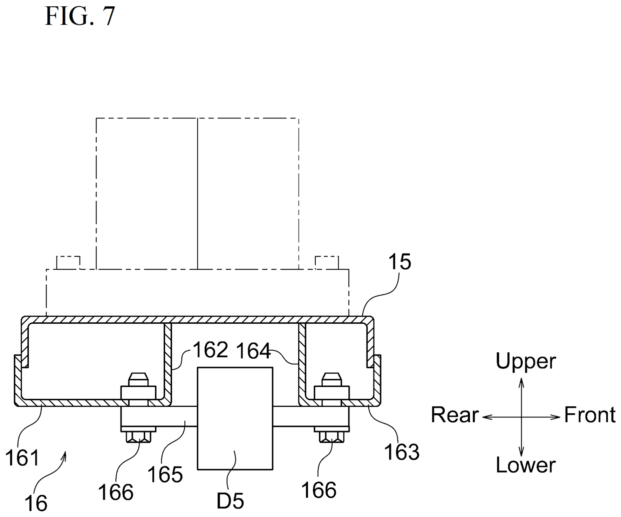

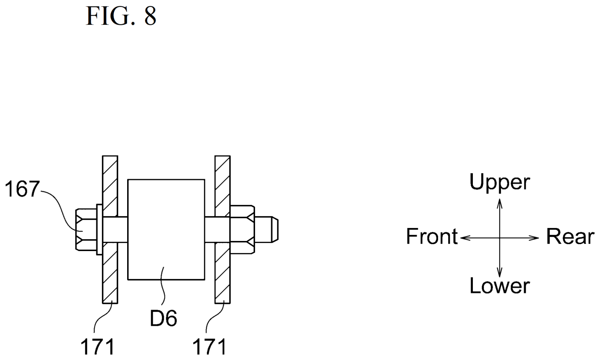

The specific structures of the left-side front mount bracket 16 and the right-side front mount bracket 17 will be described in more detail. FIG. 5A illustrates the left-side front mount bracket 16 according to an embodiment of the present invention, viewed from arrow V of FIG. 4, FIG. 5B is an exploded perspective view thereof, FIG. 6A illustrates the right-side front mount bracket 17 according to an embodiment of the present invention, viewed from arrow VI of FIG. 4, FIG. 6B is an exploded perspective view thereof, FIG. 7 is a cross-sectional view taken along line VII-VII of FIG. 5A, and FIG. 8 is a cross-sectional view taken along line III-VIII of FIG. 6A.

As illustrated in FIGS. 5A, 5B, and 7, the left-side front mount bracket 16 of the present embodiment is provided at a position that overlaps the engine mount bracket 15 on the left side in a plan view. In particular, the left-side front mount bracket 16 of the present embodiment is provided below the engine mount bracket 15 on the left side so as to overlap in the vertical direction of the vehicle. By providing the left-side front mount bracket 16 on the corresponding side member 11 rather than on the third cross member 133 in this way, a space S can be provided behind the third cross member 133. Then, by providing one or more vulnerable sites 19 composed, for example, of beads (linear recesses) at appropriate locations on the side members 11 depending on this space S, it is possible to create the space S in which the side members 11 will collapse in the event of a frontal collision.

The left-side front mount bracket 16 of the present embodiment is fixed to the corresponding side member 11 by welding or the like in a state in which before the left-side front mount bracket 16 is joined to the side member 11 by welding or the like, four components 161, 162, 163, and 164 that constitute the left-side front mount bracket 16 and the engine mount bracket 15 are joined by welding or the like to form a sub-assembly component (intermediate assembly product) as illustrated in FIG. 5B. By forming the sub-assembly component on the line side of the welding assembly line for the chassis frame 1 and then assembling it to the side member 11, the engine mount bracket 15 and the left-side front mount bracket 16 can be stacked one above the other even in a small space.

This sub-assembly component of the engine mount bracket 15 and the left-side front mount bracket 16 are structured to include two closed cross sections as illustrated in FIG. 7, and the strength required to support the engine E and the front differential gear unit D is ensured.

As illustrated in FIG. 7, the left-side front mount portion D5 of the front differential gear unit D is supported by the side member 11 through inserting a fastener 165 into the left-side front mount portion D5 and fastening with bolts 166 the fastener 165 to the left-side front mount bracket 16 having two closed cross sections. The front differential gear unit D will be elastically supported by the side member 11 because the left-side front mount portion D5 is provided with an elastic body. In particular, the work of attaching the left-side front mount portion D5 to the left-side front mount bracket 16 of the present embodiment is the work of fastening the bolts 166 from the bottom to the top of the vehicle, and the fastening work can therefore be performed without the fastening tool for the bolts 166 interfering with other components.

As illustrated in FIGS. 6A, 6B, and 8, the right-side front mount bracket 17 of the present embodiment is provided at a position that overlaps the engine mount bracket 15 on the right side in a plan view. In particular, the right-side front mount bracket 17 of the present embodiment is provided below the engine mount bracket 15 on the right side so as to overlap in the vertical direction of the vehicle. By providing the right-side front mount bracket 17 on the corresponding side member 11 rather than on the third cross member 133 or fourth cross member 134 in this way, the space S can be provided behind the third cross member 133. Then, by providing one or more vulnerable sites 19 composed, for example, of beads (linear recesses) at appropriate locations on the side members 11 depending on this space S, it is possible to create the space S in which the side members 11 will collapse in the event of a frontal collision.

The right-side front mount bracket 17 of the present embodiment is fixed to the corresponding side member 11 by welding or the like in a state in which before the right-side front mount bracket 17 is joined to the side member 11 by welding or the like, two components 171 and 172 that constitute the right-side front mount bracket 17 and the engine mount bracket 15 are joined by welding or the like to form a sub-assembly component (intermediate assembly product) as illustrated in FIG. 6B. By forming the sub-assembly component on the line side of the welding assembly line for the chassis frame 1 and then assembling it to the side member 11, the engine mount bracket 15 and the right-side front mount bracket 17 can be stacked one above the other even in a small space.

This sub-assembly component of the engine mount bracket 15 and the right-side front mount bracket 17 are structured to include two closed cross sections as illustrated in FIG. 6A, and the strength required to support the engine E and the front differential gear unit D is ensured.

As illustrated in FIG. 8, the right-side front mount portion D6 of the front differential gear unit D is supported by the side member 11 through inserting a bolt 167 into the right-side front mount portion D6 and fastening the bolt 167 with a nut. The front differential gear unit D will be elastically supported by the side member 11 because the right-side front mount portion D6 is provided with an elastic body.

As described above, the automobile V of the present embodiment comprises: a chassis frame 1 having a pair of side members 11, 11 and a plurality of cross members 13; an engine E supported by an engine mount bracket 15 provided at least on the side members 11; and a front differential gear unit D supported by the chassis frame 1 at least at a front mount portion D5, D6, the front differential gear unit D transmitting driving force of the engine E to front wheels W, the front mount portion D5, D6 being supported at a position on the side members 11 that overlaps the engine mount bracket 15 in a plan view. This allows a space S to be ensured behind a third cross member 133, and in the event of a frontal collision, the side members will collapse in this space S and can absorb the collision energy.

Moreover, according to the automobile V of the present embodiment, the front differential gear unit D has the front mount portion D5, D6 on each of right and left sides, the engine E is supported by the engine mount bracket 15, 15 provided on each of the side members 11, 11 on the right and left sides, and the front mount portion D5, D6 on each of the right and left sides is supported at a position on the side members 11, 11 that overlaps the engine mount bracket 15, 15 on each of the right and left sides in a plan view. This allows a space S to be ensured behind a third cross member 133, and in the event of a frontal collision, the side members will collapse in this space S and can absorb the collision energy.

Furthermore, according to the automobile V of the present embodiment, the front differential gear unit D further has a rear mount portion D7, and the rear mount portion D7 is supported by an adjacent fourth cross member 134 among the plurality of cross members 131 to 139 on a rear side of the engine mount bracket 15. This allows a space S to be ensured behind a third cross member 133, and in the event of a frontal collision, the side members will collapse in this space S and can absorb the collision energy.

In addition, according to the automobile V of the present embodiment, the left-side front mount portion D5 of the front differential gear unit D is supported by the side member 11 on the left side below the left-side engine mount bracket 15. This allows a space S to be ensured behind a third cross member 133, and in the event of a frontal collision, the side members will collapse in this space S and can absorb the collision energy.

Moreover, according to the automobile V of the present embodiment, the right-side front mount portion D6 of the front differential gear unit D is supported by the side member 11 on the right side below the right-side engine mount bracket 15. This allows a space S to be ensured behind a third cross member 133, and in the event of a frontal collision, the side members will collapse in this space S and can absorb the collision energy.

Furthermore, according to the automobile V of the present embodiment, the engine mount bracket 15 and the left-side front mount bracket 16 or the right-side front mount bracket 17 are attached to the corresponding side member 11 so as to overlap in a vertical direction of the vehicle. This allows a space S to be ensured behind a third cross member 133, and in the event of a frontal collision, the side members will collapse in this space S and can absorb the collision energy.

In addition, according to the automobile V of the present embodiment, the engine mount bracket 15 and the left-side front mount bracket 16 or the right-side front mount bracket 17 are made into a sub-assembly component. This allows the engine mount bracket 15 and the left-side front mount bracket 16 or the right-side front mount bracket 17 to be stacked one above the other even in a small space.

Moreover, according to the automobile V of the present embodiment, the engine mount bracket 15 and the left-side front mount bracket 16 or the right-side front mount bracket 17 are structured to include a closed cross section. This allows the engine E and the front differential gear unit D to be firmly supported.

Furthermore, according to the automobile V of the present embodiment, the left-side front mount portion D5 is attached to the left-side front mount bracket 16 that supports the left-side front mount portion, by bolts 166 that are tightened from the bottom to the top of the vehicle. This allows the tightening tool for the bolts 166 to be operated without interfering with other components.

In addition, according to the automobile V of the present embodiment, the chassis frame 1 has a third cross member 133 and a fourth cross member 134 on the side members 11, 11 in front of and behind the attachment position of the engine mount brackets 15, 15, and the side members 11, 11 have one or more vulnerable sites 19, 19 between the attachment position of the engine mount brackets 15, 15 and the third cross member 133. According to this configuration, in the event of a frontal collision, the side members will collapse in the ensured space S and can absorb the collision energy.

### [Description of Reference Numerals]

V... Automobile
E... Engine
T... Transmission
W... Wheel
B... Upper body
B1... Engine room
B2... Cabin
D... Front differential gear unit
D1... Casing
D2... Drive shaft
D3... Left front wheel drive shaft
D4... Right front wheel drive shaft
D5... Left-side front mount portion
D6... Right-side front mount portion
D7... Rear mount portion
1... Chassis frame
11... Side member
12... Cab mount bracket
13, 131 to 139... Cross member
14... Suspension tower
15... (Right-side/Left-side) engine mount bracket
16... Left-side front mount bracket
   161 to 164... Component
   165... Fastener
   166, 167... Bolt
17... Right-side front mount bracket
   171, 172... Component
18... Rear mount bracket
19... Vulnerable site
S... Space

## Claims

1. An automobile comprising:
a chassis frame having a pair of side members and a plurality of cross members;
an engine supported by an engine mount bracket provided at least on the side members; and
a front differential gear unit supported by the chassis frame at least at a front mount portion, the front differential gear unit transmitting driving force of the engine to front wheels,
the front mount portion being supported at a position on the side members that overlaps the engine mount bracket in a plan view.

2. The automobile according to claim 1, wherein
the front differential gear unit has the front mount portion on each of right and left sides,
the engine is supported by the engine mount bracket provided on each of the side members on the right and left sides, and
the front mount portion on each of the right and left sides is supported at a position on the side members that overlaps the engine mount bracket on each of the right and left sides in a plan view.

3. The automobile according to claim 1 or 2, wherein
the front differential gear unit further has a rear mount portion, and
the rear mount portion is supported by an adjacent cross member among the plurality of cross members on a rear side of the engine mount bracket.

4. The automobile according to any one of claims 2 or 3, wherein the left-side front mount portion of the front differential gear unit is supported by a left-side side member of the pair of side members below the left-side engine mount bracket.

5. The automobile according to claim 4, wherein the right-side front mount portion of the front differential gear unit is supported by a right-side side member of the pair of side members below the right-side engine mount bracket.

6. The automobile according to any one of claims 1 to 5, wherein the engine mount bracket and a bracket that supports the front mount portion are attached to at least one of the pair of side members so as to overlap in a vertical direction of the vehicle.

7. The automobile according to any one of claims 1 to 6, wherein the engine mount bracket and a bracket that supports the front mount portion are made into a sub-assembly component.

8. The automobile according to claim 7, wherein the engine mount bracket and the bracket that supports the front mount portion are structured to include a closed cross section.

9. The automobile according to any one of claims 1 to 8, wherein the front mount portion is attached to a bracket that supports the front mount portion, by a bolt that fastens the bracket from bottom to top of the vehicle.

10. The automobile according to any one of claims 1 to 9, wherein
the chassis frame has a pair of cross members on the side members in front of and behind an attachment position of the engine mount bracket, and
the side members have a vulnerable site between the attachment position of the engine mount bracket and the front-side cross member.
